# EUROPÄISCHE PATENTSCHRIFT

(11) **EP 2 474 409 B1**
(45) Veröffentlichungstag und Bekanntmachung des Hinweises auf die Patenterteilung: **26.03.2014**
(21) Anmeldenummer: 11150395.9
(22) Anmeldetag: 07.01.2011
(51) Int. Cl.: B29C 65/48, B29L 9/00, B29C 65/50, B29K 705/00, B29K 105/06, B62D 29/00

(54) **Stoffschlüssige Verbindung zwischen einem Basisbauteil und einem mehrschichtigen Faserverbundbauteil**
Connection between a basis component and a fibre reinforced multilayered composite component
Liaison entre un composant de base et un élément composite multicouche renforcé par des fibres

(43) Veröffentlichungstag der Anmeldung: 11.07.2012
(73) Patentinhaber: F&G Engineering GmbH, 71069 Sindelfingen (DE)
(72) Erfinder: Fassbaender, Peter, 71065 Sindelfingen (DE); Georgii, Andreas, 71069 Sindelfingen (DE)
(74) Vertreter: DREISS Patentanwälte PartG mbB

(56) Entgegenhaltungen:
- DE-A1- 1 729 597
- DE-A1- 1 913 632
- DE-A1- 1 920 480
- DE-A1- 1 920 480
- DE-C1- 19 607 061
- DE-C1- 19 607 061
- JP-A- 58 028 362
- US-A- 3 209 983
- US-A- 3 209 983

## Beschreibung

Die vorliegende Erfindung bezieht sich auf eine stoffschlüssige Verbindung zwischen einem Basisbauteil und einem Faserverbundbauteil nach dem Oberbegriff des Anspruchs 1.

Beispielsweise im Automobilbau ist es bekannt, metallische Basisbauteile derart mit einem Faserverbundbauteil zu verbinden, dass die beiden Enden überlappend aufeinandergelegt und verklebt werden. Dabei ist im Wesentlichen lediglich die untere Faserschicht eines mehrschichtigen Faserverbundbauteils mit dem metallischen Basisbauteil verklebt, was bedeutet, dass sich bei hoher Zugbelastung die obere oder oberen Faserschichten des Faserverbundbauteils ablösen können. Jedenfalls ist bei solchen bekannten klebenden Verbindungen die auf das Faserverbundbauteil bzw. auf diese stoffschlüssige Verbindung auszuübende Zugbelastung begrenzt.

Aus der US 3, 209, 983, der DE-OS 1 920 480 und der DE 196 07 061 C1 sind Verfahren und Anordnungen zur stoffschlüssigen Verbindung zweier gleichartiger und mehrlagiger Verbundwerkstoffe bekannt.

Aufgabe der vorliegenden Erfindung ist es, eine stoffschlüssige Verbindung zwischen einem Basisbauteil und einem Faserverbundbauteil der eingangs genannten Art zu schaffen, die einer höheren Zugbelastung unterworfen werden kann, ohne dass die Gefahr von Faserschichtablösungen am mehrschichtigen Faserverbundbauteil besteht.

Zur Lösung dieser Aufgabe sind bei einer stoffschlüssigen Verbindung zwischen einem Basisbauteil und einem Faserverbundbauteil der eingangs genannten Art die im Anspruch 1 angegebenen Merkmale vorgesehen.

Durch die erfindungsgemäßen Maßnahmen ist erreicht, dass anders als beim Stand der Technik die Faserschichten einzeln oder setweise mit dem Basisbauteil verklebt sind, so dass jede der mehreren klebenden Verbindungen zwischen einer einzelnen Faserschicht oder einem Set von wenigen Faserschichten und dem Basisbauteil der betreffenden Zugbelastung unterworfen ist, was zu einer gleichmäßigen Belastung der Faserschichten führt und damit deren Realativbewegung zueinander und infolge davon Ablösungserscheinungen zwischen den einzelnen Faserschichten verhindert. Insgesamt kann das Faserverbundbauteil dadurch höher zugbelastet werden.

In bevorzugter Ausgestaltung sind die Merkmale entweder gemäß Anspruch 2 oder gemäß Anspruch 3 vorgesehen, was eine optimale klebende Verbindung des Faserverbundbauteils bzw. deren einzelner Faserschichten mit dem Basisbauteil ermöglicht.

Vorteilhafte Ausgestaltungen ergeben sich aus den Merkmalen eines oder mehrerer der Ansprüche 4 bis 9, so dass von vorne herein auf die einzelnen zu erwartenden Zugbelastungen bei dieser stoffschlüssigen Verbindung Rücksicht genommen werden kann.

Mit den Merkmalen nach Anspruch 10 ist erreicht, dass durch die zusätzliche formschlüssige Verbindung eine Vorfixierung der Enden der einzelnen Faserschichten am Basisbauteil erreicht werden kann.

In bestimmten Fällen, beispielsweise wenn das mehrschichtige Faserverbundbauteil eine große Länge oder insgesamt eine große Fläche aufweist, kann es vorteilhaft sein, wenn die stoffschlüssige Verbindung mit dem Basisbauteil unabhängig vom gesamten Faserverbundbauteil in teilweise getrennter bzw. herstellungstechnisch gesonderter Weise erfolgen kann. Um dies zu erreichen, sind bei einem weiteren Ausführungsbeispiel die Merkmale nach Anspruch 11 vorgesehen. Mit anderen Worten, bei dieser Ausgestaltung wird der Verbindungsbereich als gesonderte Borte des oder für das Faserverbundbauteil hergestellt, die an einem Randbereich mit dem Basisbauteil in einer der vorgenannten Weisen verbunden wird und bei der am anderen Randbereich eine schäftende Struktur mit dem oder dem Hauptteil des Faserverbundbauteils erfolgt. Es kann somit für verschiedene Einsätze und/oder verschiedenartig ausgestaltete Basisbauteile unabhängig von der Form und Größe des Faserverbundbauteils eine Borte vorgefertigt und mit dem Basisbauteil verbunden werden. Dies kann zu erheblichen Einsparungen bei der Herstellung bzw. Montage und Fertigung führen.

Auch bei der schäftenden Verbindung der Borte mit dem oder den Hauptbereichen des Faserverbundbauteils kann gemäß den Merkmalen des Anspruchs 12 eine einzelne oder setweise Schäftung der Faserschichten erfolgen.

Die vorliegende Erfindung bezieht sich ferner auf eine bspw. im Automobilbau im Schienenfahrzeugbau, im Bootsbau oder bei Windkraftanlagen verwendete Anordnung aus Basisbauteil und Faserbundbauteil nach Anspruch 13.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer Draufsicht eine stoffschlüssige Verbindung zwischen einem metallischen Basisbauteil und einem Faserverbundbauteil gemäß einem ersten Ausführungsbeispiel vorliegender Erfindung,
- Figur 2: einen Schnitt längs der Linie II-II der Figur 1,
- Figur 3: in schematischer Draufsicht eine stoffschlüssige Verbindung zwischen einem metallischen Basisbauteil und einem Faserverbundbauteil gemäß einem zweiten Ausführungsbeispiel vorliegender Erfindung und
- Figur 4: einen Schnitt längs der Linie IV-IV der Figur 3.

Die in der Zeichnung dargestellte stoffschlüssige Verbindung 10 bzw. 110 dient zum zugfesten Verbinden eines mehrschichtigen Faserverbundbauteils 11 mit einem Basisbauteil 12 aus Metall. Eine solche stoffschlüssige Verbindung 10 bzw. 110 kann im Automobilbau, im Schienenfahrzeugbau, im Bootsbau oder beim Bau von Windkraftanlagen eingesetzt werden. Stoffschlüssig gemäß vorliegender Erfindung bedeutet eine klebende Verbindung zwischen dem Faserverbundbauteil 11 bzw. 111 und dem Basisbauteil 12 bzw. 112.

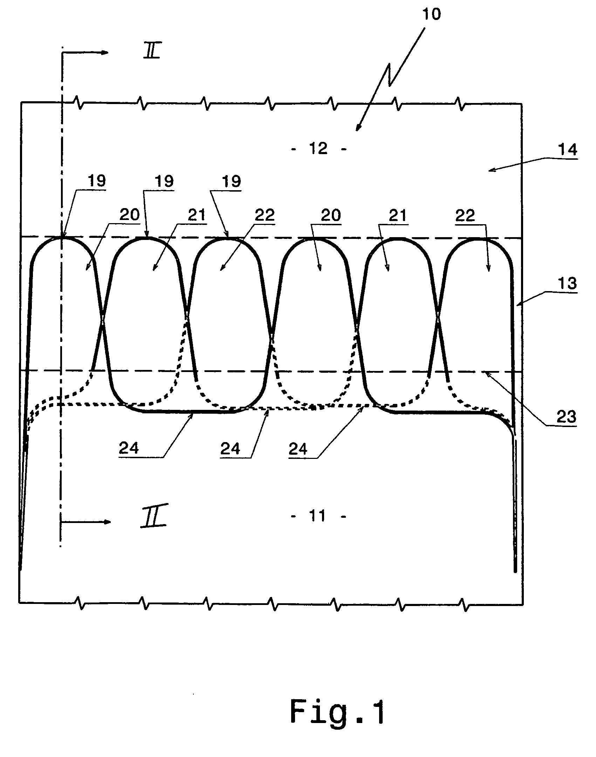

Beiden Ausführungsbeispielen gemäß den Figuren 1 und 2 bzw. 3 und 4 ist gemeinsam, dass das Faserverbundbauteil 11, 111, das aus mehreren Faserschichten 15, 16, 17 bzw. 115, 116, 117 aufgebaut ist, im Verbindungsbereich 13, 113 mit dem Basisbauteil 12, 112 in seine einzelnen Faserschichten horizontal aufgetrennt ist, derart, dass ihre verschiedenartig beschnittenen freien Enden 20, 21, 22 bzw. 120, 121, 122 im Verbindungsbereich 13, 113 jeweils separat auf die Oberfläche 14, 114 des Basisbauteils 12, 112 geklebt sind. Mit anderen Worten, die hier fingerartigen freien Enden 20, 21, 22 bzw. 120, 121, 122 jeder einzelner Faserschicht 15, 16, 17 bzw. 115, 116, 117 sind ganz oder teilflächig für sich mit dem Basisbauteil 12, 112 verklebt.

Wenn auch bei den dargestellten Ausführungsbeispielen lediglich jeweils drei Faserschichten dargestellt sind, versteht es sich, dass ein derartiges Faserverbundbauteil 11, 111 im Allgemeinen mehr als drei Faserschichten aufweist. Dabei kann das Faserverbundbauteil 11, 111 im Verbindungsbereich 13, 113 statt in seine jeweils einzelnen Faserschichten in Sets von wenigen Faserschichten aufgeteilt bzw. aufgetrennt sein, wobei ein Set beispielsweise zwei oder drei miteinander noch verbundene Faserschichten aufweisen kann. Bei beiden Ausführungsbeispielen sind außerdem die freien Enden 20, 21, 22 bzw. 120, 121, 122 des Faserverbundbauteil länger als der Überlappungsbreite des Verbindungsbereichs 13, 113 entspricht, derart, dass die Übergangsbereiche 24, 124 zwischen benachbarten freien Enden derselben Faserschicht bzw. desselben Sets aus wenigen Faserschichten über die Endkante 23, 123 des Verbindungsbereichs 13, 113 des Basisbauteils 12, 112 hinausragt. Dabei können diese Übergangsbereiche 24, 124 zwischen den verschiedenen freien Enden 20 bis 22, 120 bis 122 gegenüber der Endkante 23, 123 des Verbindungsbereichs 13, 113 unterschiedlich große Abstände besitzen.

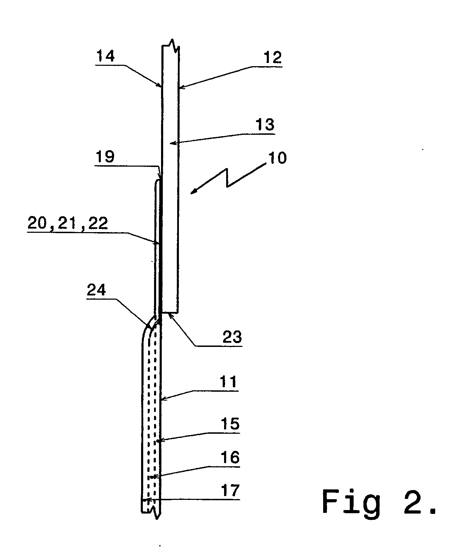

Beim in den Figuren 1 und 2 dargestellten ersten Ausführungsbeispiel ist jede der Faserschichten 15, 16, 17 des Faserverbundbauteils 11 mit jeweils einem Paar freier Enden 20 bzw. 21 bzw. 22 versehen, die einander benachbart und für jede Faserschicht 15, 16, 17 abwechselnd bzw. verschachtelt angeordnet sind. Mit anderen Worten, jedes dieser freien Enden der einzelnen Faserschichten ist im Verbindungsbereich 13 ganz- oder teilflächig auf der Oberfläche 14 des Basisbauteils 12 aufgelegt und mit diesem klebend verbunden. Dabei sind die freien Enden 20, 21, 22 der einzelnen Faserschichten im Wesentlichen jeweils gleich lang ausgebildet, so dass das Basisbauteil 12 einen querverlaufenden länglich rechteckförmigen Verbindungsbereich 13 besitzt. Dabei sind, wie sich aus dem Schnitt der Figur 2 ergibt, die einzelnen freien Enden 20, 21, 22 in ihrer horizontalen Ebene entsprechend ihrer Schichtanordnung zum Verbindungsbereich 13 bzw. der Oberfläche 14 des Basisbauteils 12 hin versetzt.

Es versteht sich, dass anders als in Figur 1 dargestellt, jede oder einzelne der Faserschichten 15, 16, 17 mit jeweils mehr als einem Paar freier Enden 20, 21, 22 oder nur mit einem versehen sein kann. Des Weiteren ist es möglich, die langgestreckten freien Enden 20, 21, 22 auf der Oberfläche 14 des Basisbauteils 12 derart auszurichten, also beispielsweise auch schrägzustellen, dass die Erstreckungsrichtung der freien Enden der Richtung der vorgegebenen Zugbelastung im Faserverbundbauteil 11 entspricht.

Bei diesem in den Figuren 1 und 2 dargestellten Ausführungsbeispiel erfolgt das verschiedenartige Beschneiden der freien Enden 20 bis 22 der einzelnen oder satzweise verbundenen Faserschichten 15 bis 17 dadurch, dass die betreffenden Faserschichten passgenau aufeinander gelegt und an ihren freien Enden 20 bis 22 in der Breite versetzt in gleicher Weise beschnitten werden, worauf die Faserschichten 15 bis 17 zum mehrschichtigen Faserverbundteil 11 miteinander verbunden bzw. verklebt werden. Dieses verschiedenartige oder gleiche Beschneiden der freien Enden 20 bis 22 der einzelnen Faserschichten 15 bis 17 kann auch in der Weise erfolgen, dass die Faserschichten 15 bis 17 aufeinandergelegt und alle Faserschichten in fluchtender Weise gleich beschnitten werden. Danach werden die Faserschichten 15 bis 17 in Querrichtung derart gegeneinander versetzt, dass die gleich beschnittenen freien Enden 20 bis 22 zueinander versetzt angeordnet sind, worauf die so versetzten Faserschichten 15 bis 17 zum Faserverbundteil 11 miteinander verbunden bzw. verklebt werden. Bei dieser Herstellungsvariante können die Faserschichten 15 bis 17 unterschiedlich breit sein, so dass sie anschließend längsrandseitig auf dasselbe Maß abgeschnitten werden.

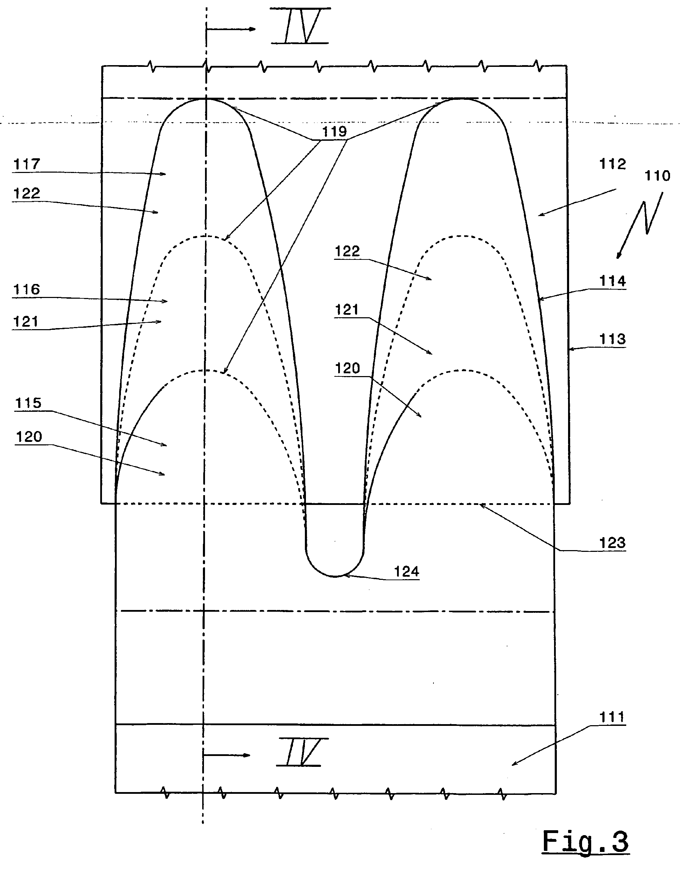

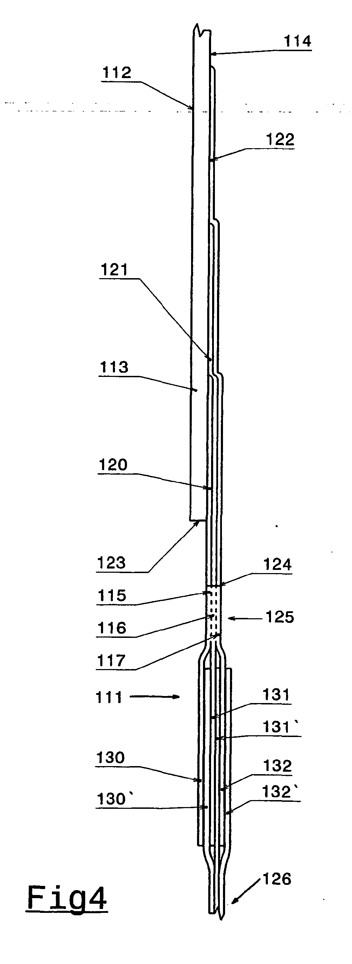

Bei dem in den Figuren 3 und 4 dargestellten Ausführungsbeispiel ist die stoffschlüssige Verbindung 110 eines mehrschichtigen Faserverbundbauteils 111 mit einem Basisbauteil 112 in ähnlicher Weise ausgebildet. Auch hier ist das Faserverbundbauteil 111 in mehrere Faserschichten 115, 116, 117 usw. aufgetrennt, welche Faserschichten jeweils ein Paar freier Enden 120 bzw. 121 bzw. 122 aufweisen, die anders als beim ersten Ausführungsbeispiel nach den Figuren 1 und 2 hier übereinander angeordnet sind und dabei von unten (der Oberfläche 114) nach oben eine größere Länge aufweisen, so dass jedes der freien Enden 120 bis 122 der einzelnen Faserschichten 115 bis 117 nur über eine Teilfläche mit der Oberfläche 114 des Basisbauteils 112 unmittelbar verklebt ist. Hierdurch ergibt sich zwischen Faserverbundbauteil 111 bzw. dessen freien Enden 120 bis 122 und dem Basisbauteil 112 ein Verbindungsbereich 113, der im Wesentlichen in Richtung der freien Enden länglich rechteckförmig ist. Die Übergangsbereiche 124 zwischen den einzelnen freien Enden 120 bis 123 sind ebenfalls jenseits der Endkante 123 des Verbindungsbereichs 113 des Basisbauteils 112.

Bei dem in den Figuren 3 und 4 dargestellten Ausführungsbeispiel können die freien Enden 120 bis 122 auch in der Weise unterschiedlich beschnitten werden, dass die freien Enden 120 bis 122 eine unterschiedliche Breite von der unteren zur oberen Schicht hin aufweisen, das heißt eine sich vergrößernde Breite von der unteren Schicht zur oberen Schicht hin aufweisen. Es versteht sich, dass diese von unten nach oben sich vergrößernde Grundfläche sowohl sich auf die Länge als auch auf die Breite beziehen kann. Außerdem können unterschiedlich geformte Grundflächen an den freien Enden 120 bis 122 geschnitten werden derart, dass die Grundfläche des freien Endes einer oberen Schicht die Grundfläche jeweils einer darunterliegenden unteren Schicht überragen, so dass der jeweils das andere Ende überragende Grundflächenbereich mit dem Basisbauteil verbunden werden kann.

Bei beiden Ausführungsbeispielen sind sowohl die Endkanten 19 bzw. 119 der freien Enden 20 bis 22 bzw. 120 bis 122 als auch die Übergangsbereiche 24, 124 zwischen den genannten freien Enden gerundet. Auch beim Ausführungsbeispiel nach den Figuren 3 und 4 sind im Schnitt gemäß Figur 4 die freien Enden 120 bis 122 aus ihren horizontalen Ebenen an den betreffenden Stellen abgewinkelt versetzt auf die Oberfläche 114 des Basisbauteils 112 gebracht.

In nicht dargestellter Weise sind bei beiden Ausführungsbeispielen die freien Enden 20 bis 22 bzw. 120 bis 122 zusätzlich zur stoffschlüssigen Verbindung mit einer formschlüssigen Verbindung beispielsweise in Form eines Niets versehen, um eine Vorfixierung der freien Enden auf der Oberfläche 14, 114 des Basisbauteils 12, 112 für die Klebeverbindung zu erreichen.

Beim zweiten Ausführungsbeispiel nach den Figuren 3 und 4 ist eine Variante dahingehend gegeben, dass das Faserverbundbauteil 111 in eine schmale Borte 125 und einen wesentlich längeren bzw. flächengrößeren Hauptteil 126 unterteilt ist. Die Borte 125 umfasst die aufgetrennten Faserschichten 115 bis 117 mit ihren freien Ende 120 bis 122 und kann unabhängig vom Design des Hauptteils 126 vorgefertigt und mit dem Basisbauteil 112 verbunden werden.

Sowohl die Borte 125 als auch der Hauptteil 126 des Faserverbundbauteils sind nach dem Durchtrennen des Faserverbundteils 111 an ihren so entstandenen Enden jeweils für sich in einzelne Faserschichten 130, 131, 132 bzw. 130', 131', 132' aufgefächert derart, dass sich die einander gegenüberliegenden Enden jeder Faserschicht nach Auffächern einander überlappen. Mit anderen Worten, diese überlappend aufgefächerten Enden von Borte 125 und Hauptteil 126 werden mittels Schäften wieder miteinander verbunden, und zwar dadurch, dass die geschäfteten und überlappend aufeinander gelegten Faserschichten miteinander klebend verbunden werden. Es versteht sich, dass das Schäften der beiden aufgetrennten und unbeschnittenen Enden von Borte 125 und Hauptteil 126 statt in einzelne Faserschichten auch in entsprechende Sets von wenigen Faserschichten erfolgen kann.

Es versteht sich, dass die Borte 125 und der Hauptteil 126 des Faserverbundbauteils 111 getrennt hergestellt werden können, und dass diese Variante einer separaten Borte 125 auch beim Ausführungsbeispiel nach den Figuren 1 und 2 angewendet werden kann.

Wenn auch bei den dargestellten Ausführungsbeispielen die aufgetrennten und verschiedenartig beschnittenen Faserschichten am freien Ende des Faserverbundteils 11, 111 bzw. der Borte 125 eines Faserverbundteils 111 jeweils einzeln auf die Oberfläche 14, 114 des Basisbauteils 12, 112 klebend gebracht werden können, versteht es sich, dass die freien Enden der Faserschichten des Faserverbundbauteils 11, 111 bzw. der Borte 125 auf die Unterseite oder teilweise auf Oberseite und Unterseite gebracht werden können.

Somit ist bei beiden Ausführungsbeispielen die Stoffschlüssige Verbindung 10, 110 zwischen dem Basisbauteil 12, 112 und dem Faserverbundbauteil 11, 111, das mehrere Faserschichten 15-17; 115-117 aufweist, wobei das betreffende Ende des Faserverbundbauteils mit dem Basisbauteil überlappend verklebt ist, das mehrschichtige Faserverbundbauteil 11, 111 im Bereich der Verbindung mit dem Basisbauteil 12, 112 in seine Faserschichten 15-17; 115-117 zumindest teilweise aufgetrennt und die aufgetrennten Faserschichten sind an ihren freien Enden 20-22; 120-122 verschiedenartig beschnitten und jeweils insbesondere einzeln mit dem Basisbauteil 12, 112 verklebt. Beim ersten Ausführungsbeispiel sind die einzelnen Faserschichten 15-17 in ihrem Überlappungsbereich 13 mit dem Basisbauteil 12 so beschnitten, dass das mit dem Basisbauteil 12 verklebte Ende 20-22 einer Faserschicht 15-17 neben dem mit dem Basisbauteil 12 verklebte Ende einer jeweils anderen Faserschicht angeordnet ist, während beim zweiten Ausführungsbeispiel die einzelnen Faserschichten 115-117 in ihrem Überlappungsbereich 113 mit dem Basisbauteil 112 so beschnitten sind, dass das mit dem Basisbauteil 112 verklebte Ende 120-122 einer Faserschicht 115-117 eine Grundfläche aufweist, die größer als das mit dem Basisbauteil 112 verklebte Ende einer jeweils darunterliegenden Faserschicht ist.

Bei beiden Ausführungsbeispielen ist die Anordnung der mit dem Basisbauteil 12, 112 verklebten Enden 20-22; 120-122 der Faserschichten 15-17; 115-117 am Basisbauteil unabhängig von der geschichteten Anordnung der Faserschichten im Faserverbundteil 11, 111. Die mit dem Basisbauteil 12, 112 verklebten benachbarten Enden 20-22; 120-122 einer Faserschicht 15-17; 115-117 sind über einen außerhalb des Basisbauteils 12, 112 sich befindenden gerundeten Schnitt 24, 124 miteinander verbunden, während die mit dem Basisbauteil 12, 112 verklebten Enden 20-22; 120-122 der einzelnen Faserschichten gerundete Kanten 19, 119 aufweisen. Dabei kann der Überlappungsbereich der Enden 20-22; 120-122 der einzelnen Faserschichten 15-17; 115-117 und dem betreffenden Bereich 13, 113 des Basisbauteils 12, 112 unterschiedlich sein.

## Patentansprüche

1. Stoffschlüssige Verbindung (10, 110) zwischen einem metallischen Basisbauteil (12, 112) und einem Faserverbundbauteil (11, 111), das mehrere Faserschichten (15-17; 115-117) aufweist, wobei das betreffende Ende des Faserverbundbauteils mit dem Basisbauteil (12, 112) überlappend verklebt ist, **dadurch gekennzeichnet, dass** das mehrschichtige Faserverbundbauteil (11, 111) im Bereich der Verbindung mit dem Basisbauteil (12, 112) in seine Faserschichten (15-17; 115-117) zumindest teilweise aufgetrennt ist und die aufgetrennten Faserschichten an ihren freien Enden (20-22; 120-122) verschiedenartig beschnitten und jeweils insbesondere einzeln mit dem Basisbauteil (12, 112) verklebt sind.

2. Verbindung nach Anspruch 1, **dadurch gekennzeichnet, dass** die einzelnen Faserschichten (15-17) in ihrem Überlappungsbereich (13) mit dem Basisbauteil (12) so beschnitten sind, dass das mit dem Basisbauteil (12) verklebte Ende (20-22) einer Faserschicht (15-17) neben dem mit dem Basisbauteil (12) verklebte Ende einer jeweils anderen Faserschicht angeordnet ist.

3. Verbindung nach Anspruch 1, **dadurch gekennzeichnet, dass** die einzelnen Faserschichten (115-117) in ihrem Überlappungsbereich (113) mit dem Basisbauteil (112) so beschnitten sind, dass das mit dem Basisbauteil (112) verklebte Ende (120-122) einer Faserschicht (115-117) eine Grundfläche aufweist, die größer als das mit dem Basisbauteil (112) verklebte Ende einer jeweils darunterliegenden Faserschicht ist.

4. Verbindung nach mindestens einem der Ansprüche 1 bis 3, **dadurch gekennzeichnet, dass** die Anordnung der mit dem Basisbauteil (12, 112) verklebten Enden (20-22; 120-122) der Faserschichten (15-17; 115-117) am Basisbauteil unabhängig von der geschichteten Anordnung der Faserschichten im Faserverbundteil (11, 111) ist.

5. Verbindung nach mindestens einem der vorhergehenden Ansprüche, **dadurch gekennzeichnet, dass** die mit dem Basisbauteil (12, 112) verklebten benachbarten Enden (20-22; 120-122) einer Faserschicht (15-17; 115-117) über einen außerhalb des Basisbauteils (12, 112) sich befindenden gerundeten Schnitt (24, 124) miteinander verbunden sind.

6. Verbindung nach mindestens einem der vorhergehenden Ansprüche, **dadurch gekennzeichnet, dass** die mit dem Basisbauteil (12, 112) verklebten Enden (20-22; 120-122) der einzelnen Faserschichten gerundete Kanten (19, 119) aufweisen.

7. Verbindung nach mindestens einem der vorhergehenden Ansprüche, **dadurch gekennzeichnet, dass** der Überlappungsbereich der Enden (20-22; 120-122) der einzelnen Faserschichten (15-17; 115-117) und dem betreffenden Bereich (13, 113) des Basisbauteils (12, 112) unterschiedlich ist.

8. Verbindung nach mindestens einem der vorhergehenden Ansprüche, **dadurch gekennzeichnet, dass** die Enden (20-22; 120-122) der einzelnen Faserschichten (15-17; 115-117) mit der Ober- und/oder Unterseite des Basisbauteils (12, 112) verklebt sind.

9. Verbindung nach mindestens einem der vorhergehenden Ansprüche, **dadurch gekennzeichnet, dass** die Ausrichtung der mit dem Basisbauteil (12, 112) verklebten Enden (20-22; 120-122) der einzelnen Faserschichten (15-17; 115-117) in Richtung der Zugbelastung des Faserbundbauteils (11, 111) vorgesehen ist.

10. Verbindung nach mindestens einem der vorhergehenden Ansprüche, **dadurch gekennzeichnet, dass** die mit dem Basisbauteil (12, 112) verklebten Enden (20-22; 120-122) der einzelnen Faserschichten (15-17; 115-117) mit dem Basisbauteil (12, 112) zusätzlich formschlüssig verbunden sind.

11. Verbindung nach mindestens einem der vorhergehenden Ansprüche, **dadurch gekennzeichnet, dass** das mehrschichtige Faserverbundbauteil (11, 111) in einem Abstand zum Verbindungsbereich (13, 113) mit dem Basisbauteil (12, 112) derart aufgetrennt ist, dass an beiden Enden einzelne Faserschichten (130-132; 130'-132') einander überlappend aufgefächert und durch Schäften miteinander klebend verbunden sind.

12. Verbindung nach Anspruch 11, **dadurch gekennzeichnet, dass** die Faserschichten (130-132; 130'-132') einzeln oder setweise einander überlappend aufgefächert sind.

## Claims

1. Connection by bonding or coalescence (10, 110) between a metallic base component (12, 112) and a composite fibre-reinforced component (11, 111) which has a plurality of layers of fibres (15-17; 115-117), the end concerned of the composite fibre-reinforced component being adhesive-bonded to the base component (12, 112) with an overlap, **characterised in that**, in the region of the connection to the base component (12, 112), the multi-layered composite fibre-reinforced component (11, 111) is at least partly cut apart into its layers of fibres (15-17; 115-117) and the layers of fibres which are cut apart are trimmed in different ways at their free ends (20-22; 120-122) and are each adhesive-bonded, in particular individually, to the base component (12, 112).

2. Connection according to claim 1, **characterised in that**, in the region (13) in which they overlap with the base component (12), the individual layers of fibres (15-17) are trimmed in such a way that that end (20-22) of a layer of fibres (15-17) which is adhesive-bonded to the base component (12) is arranged next to that end of another layer of fibres which is adhesive-bonded to the base component (12).

3. Connection according to claim 1, **characterised in that**, in the region (113) in which they overlap with the base component (112), the individual layers of fibres (115-117) are trimmed in such a way that that end (120-122) of a layer of fibres (115-117) which is adhesive-bonded to the base component (112) has a bottom surface which is larger than that end of a layer of fibres laying below it which is adhesive-bonded to the base component (112).

4. Connection according to at least one of claims 1 to 3, **characterised in that** the arrangement on the base component (12, 112) of those ends (20-22; 120-122) of the layers of fibres (15-17; 115-117) which are adhesive-bonded to the base component is not dependent on the layered arrangement of the layers of fibres in the composite fibre-reinforced component (11, 111).

5. Connection according to at least one of the preceding claims, **characterised in that** those adjacent ends (20-22; 120-122) of a layer of fibres (15-17; 115-117) which are adhesive-bonded to the base component (12, 112) are connected together by a rounded cut (24, 124) situated clear of the base component (12, 112).

6. Connection according to at least one of the preceding claims, **characterised in that** those ends (20-22; 120-122) of the individual layers of fibres which are adhesive-bonded to the base component (12, 112) have rounded edges (19, 119).

7. Connection according to at least one of the preceding claims, **characterised in that** the region in which the ends (20-22; 120-122) of the individual layers of fibres (15-17; 115-117) overlap is different from that region (13, 113) of the base component (12, 112) which is involved.

8. Connection according to at least one of the preceding claims, **characterised in that** the ends (20-22; 120-122) of the individual layers of fibres (15-17; 115-117) are adhesive-bonded to the upper side and/or underside of the base component (12, 112).

9. Connection according to at least one of the preceding claims, **characterised in that** provision is made for the alignment of those ends (20-22; 120-122) of the individual layers of fibres (15-17; 115-117) which are adhesive-bonded to the base component (12, 112) to lie in the direction in which the composite fibre-reinforced component (11, 111) is stressed in tension.

10. Connection according to at least one of the preceding claims, **characterised in that** those ends (20-22; 120-122) of the individual layers of fibres (15-17; 115-117) which are adhesive-bonded to the base component (12, 112) are, in addition, positively connected to the base component (12, 112).

11. Connection according to at least one of the preceding claims, **characterised in that** the multi-layered composite fibre-reinforced component (11, 111) is cut apart at a distance from the region (13, 113) of the connection to the base component (12, 112) in such a way that, at both its ends, individual layers of fibres (130-132; 130'-132') are fanned apart to overlap one another and are connected together by adhesion by fibre stems.

12. Connection according to claim 11, **characterised in that** the layers of fibres (130-132; 130'-132') are fanned apart to overlap one another individually or in sets.

## Revendications

1. Assemblage par adhésion de matière (10, 110) entre un élément de base (12, 112) métallique et un élément renforcé par des fibres (11, 111) comportant plusieurs couches de fibres (15-17; 115-117), l'extrémité concernée de l'élément renforcé par des fibres étant collé à l'élément de base (12, 112) en chevauchant celui-ci, **caractérisé en ce que** l'élément renforcé par des fibres (11, 111) multicouche est désassemblé au moins partiellement dans ses couches de fibres (15-17; 115-117) dans la zone de l'assemblage à l'élément de base (12, 112) et les couches de fibres désassemblées sont rognées de diverses manières au niveau de leurs extrémités libres (20-22; 120-122) et sont collées chacune, en particulier individuellement, à l'élément de base (12, 112).

2. Assemblage selon la revendication 1, **caractérisé en ce que** les différentes couches de fibres (15-17), dans leur zone de chevauchement (13) avec l'élément de base (12), sont rognées de telle sorte que l'extrémité (20-22), collée à l'élément de base (12), d'une couche de fibres (15-17) est disposée à côté de l'extrémité, collée à l'élément de base (12), d'une autre couche de fibres respective.

3. Assemblage selon la revendication 1, **caractérisé en ce que** les différentes couches de fibres (115-117), dans leur zone de chevauchement (113) avec l'élément de base (112), sont rognées de telle sorte que l'extrémité (120-122), collée à l'élément de base (112), d'une couche de fibres (115-117) comporte une surface de base supérieure à celle de l'extrémité, collée à l'élément de base (112), d'une couche de fibres respectivement située au-dessous.

4. Assemblage selon au moins l'une quelconque des revendications 1 à 3, **caractérisé en ce que** la disposition des extrémités (20-22; 120-122), collées à l'élément de base (12, 112), des couches de fibres (15-17; 115-117) sur l'élément de base est indépendante de la disposition des couches de fibres dans l'élément renforcé par des fibres (11, 111).

5. Assemblage selon au moins l'une quelconque des revendications précédentes, **caractérisé en ce que** les extrémités (20-22; 120-122) adjacentes, collées à l'élément de base (12, 112), d'une couche de fibres (15-17; 115-117) sont reliées entre elles par une incision (24, 124) arrondie située en dehors de l'élément de base (12, 112).

6. Assemblage selon au moins l'une quelconque des revendications précédentes, **caractérisé en ce que** les extrémités (20-22; 120-122), collées à l'élément de base (12, 112), des différentes couches de fibres possèdent des arêtes (19, 119) arrondies.

7. Assemblage selon au moins l'une quelconque des revendications précédentes, **caractérisé en ce que** la zone de chevauchement des extrémités (20-22; 120-122) des différentes couches de fibres (15-17; 115-117) et de la zone (13, 113) concernée de l'élément de base (12, 112) est différente.

8. Assemblage selon au moins l'une quelconque des revendications précédentes, **caractérisé en ce que** les extrémités (20-22; 120-122) des différentes couches de fibres (15-17; 115-117) sont collées à la face supérieure et/ou face inférieure de l'élément de base (12, 112).

9. Assemblage selon au moins l'une quelconque des revendications précédentes, **caractérisé en ce que** l'orientation des extrémités (20-22; 120-122), collées à l'élément de base (12, 112), des différentes couches de fibres (15-17; 115-117) est prévue dans le sens de la sollicitation en traction de l'élément renforcé par des fibres (11, 111).

10. Assemblage selon au moins l'une quelconque des revendications précédentes, **caractérisé en ce que** les extrémités (20-22; 120-122), collées à l'élément de base (12, 112), des différentes couches de fibres (15-17; 115-117) sont assemblées, en plus, par adhésion de matière à l'élément de base (12, 112).

11. Assemblage selon au moins l'une quelconque des revendications précédentes, **caractérisé en ce que** l'élément renforcé par des fibres (11, 111) multicouche est désassemblé à une distance de la zone d'assemblage (13, 113) à l'élément de base (12, 112), de telle sorte qu'au niveau des deux extrémités, différentes couches de fibres (130-132; 130'-132') sont réparties en se chevauchant les unes les autres et sont assemblées par collage les unes aux autres au moyen de tiges.

12. Assemblage selon la revendication 11, **caractérisé en ce que** les couches de fibres (130-132; 130'-132') sont réparties en se chevauchant les unes les autres individuellement ou par groupes.
